# EUROPEAN PATENT APPLICATION

(11) **EP 4 822 066 A1**
(43) Date of publication of application: **14.10.2026**
(21) Application number: 24917903.7
(22) Date of filing: 22.04.2024
(51) Int. Cl.: C25D 3/56, C25D 3/46, C01B 32/182, C01B 32/194, C25D 3/30, C25D 15/00

(54) **COMPOUND DISPERSING AGENT, MIXED ELECTROPLATING SOLUTION AND USE**

(30) Priority: 16.01.2024 CN 202410063874
(71) Applicant: Zhejiang Chint Electrics Co., Ltd., Wenzhou, Zhejiang 325603 (CN)
(72) Inventor: XU, Zhengli, Wenzhou, Zhejiang 325602 (CN); SHEN, Qi, Wenzhou, Zhejiang 325602 (CN); ZENG, Lang, Wenzhou, Zhejiang 325602 (CN); LI, Tongyang, Wenzhou, Zhejiang 325602 (CN); ZHAO, Wei, Wenzhou, Zhejiang 325602 (CN)
(74) Representative: Berggren Oy
(86) International application number: PCT/CN2024/089198
(87) International publication number: WO 2025/152288

(57) **Abstract**

Disclosed in the present disclosure are a compound dispersing agent, a mixed electroplating solution and the use. The compound dispersing agent includes a first anionic surfactant, a second anionic surfactant and a nonionic surfactant, where the first anionic surfactant comprises sulfonate compounds; and/or the second anionic surfactant comprises one or more of betaine and carboxylate; and/or the nonionic surfactant comprises one or more of sulfonated naphthoquinone formaldehyde condensate, melamine-formaldehyde condensate and sodium methylnaphthalene sulfonic acid formaldehyde condensate.

## Description

### PRIORITY CLAIM

This application claims priority to Chinese Patent Application No. 202410063874.5 filed with China National Intellectual Property Administration on January 16, 2024. The entire content of the above application is incorporated herein by reference.

### TECHNICAL FIELD

The present disclosure relates to a field of electroplating technology, and more particularly, to a compound dispersing agent, a mixed electroplating solution and a conductor.

### BACKGROUND

Graphene is a novel two-dimensional nanomaterial, of which the nanosheets are single-atomic-layer thick two-dimensional materials composed of sp² hybridized carbon atoms. Graphene is the thinnest and hardest known nanomaterial, with a strength of up to 1.01 TPa, 100 times that of structural steel, while its density is only 1/5 of structural steel. Graphene has a thermal conductivity of up to 5300 W/m·K, higher than those of carbon nanotubes and diamond; has an electron mobility at room temperature exceeding 200000 cm²/V·s, higher than those of carbon nanotubes or silicon crystals; and has a resistivity of only about 1 Ω·m, lower than that of copper or silver, making it the material with the lowest known resistivity. Therefore, graphene is commonly used in composite electrical contact materials.

Metal-based graphene composite electrical contact materials have more superior electrical conductivity, wear resistance and thermal conductivity than the composite electrical contact materials with other reinforcing phases. In addition, graphene has good stability, and there is no dielectric corrosion problem after graphene is composited with metals.

Due to the small size and large specific surface area of graphene, it is difficult to disperse it. Moreover, there is a strong π-π interaction between the flake layer of the graphene, so that the monolayer graphene dispersed in a dispersion tends to agglomerate into graphite, which seriously affects its performance. The surfactants, penetrants and the like in the electroplating solution in the related art are difficult to break the π-π interaction force between the graphene layers, and cannot solve the problem that the monolayer graphene dispersed in the dispersion tends to agglomerate.

### TECHNICAL PROBLEM

The present application provides a compound dispersing agent, aiming to solve the problem that the monolayer graphene dispersed in a dispersion tends to agglomerate in the related art.

### TECHNICAL SOLUTION

In a first aspect, the present disclosure provides a compound dispersing agent,
the compound dispersing agent includes a first anionic surfactant, a second anionic surfactant and a nonionic surfactant, where the first anionic surfactant includes sulfonate compounds; and/or
the second anionic surfactant includes one or more of betaine and carboxylate; and/or
the nonionic surfactant includes one or more of sulfonated naphthoquinone formaldehyde condensate, melamine-formaldehyde condensate, sodium methylnaphthalene sulfonic acid formaldehyde condensate, sodium cresol sulfonic acid formaldehyde condensate and sodium 2-naphthalene sulfonic acid formaldehyde condensate.

In a second aspect, the present disclosure further provides a mixed electroplating solution, including the compound dispersing agent and water, where the compound dispersing agent is the compound dispersing agent described above. In a third aspect, the present disclosure further provides a conductor, including a substrate and a plating layer located outside the substrate, where the plating layer is made from the mixed electroplating solution described above.

### BENEFICIAL EFFECTS

Beneficial effects of the present application: in the compound dispersing agent of the present application, the first anionic surfactant plays a role in surface wetting and dispersion, the second anionic surfactant plays a main role in dispersion, and the nonionic surfactant plays a role in surface active wetting. The compound dispersing agent of the present application has good synergistic compatibility, and functions to disperse graphene in a plating solution system, exerts a certain positive effect on ion migration in the plating solution, and does not cause poisoning harm to the plating solution. In addition, the compound dispersing agent of the present application also has a certain wetting effect on the cathode. Further, the compound dispersing agent of the present application can make hydrogen bubbles easier to detach from the electroplated part, thereby reducing voids, wet the graphene to facilitate the function of the dispersing agent, and under the action of the dispersing agent, the graphene can be caused to repel and disperse between each other to facilitate electroplating.

### DETAILED DESCRIPTION

The description of the present disclosure, the term "include" means "including but not limited to".

The terms "plurality of", "multiple times" or similar expressions refer to two (times) or more (times), for example, two (times), three (times), four (times), five (times), six (times) and the like.

The term "and/or" includes any one of two or more related listed items, and also includes any and all combinations of the related listed items. The any and all combinations include any two related listed items, any more related listed items, or all combinations of the related listed items. For example, "A and/or B" includes three alternative solutions: A, B and A+B. For another example, the technical solution "A, and/or B, and/or C, and/or D" includes any one of A, B, C and D (i.e., the technical solutions all connected by "logical OR"), also includes any and all combinations of A, B, C and D, i.e., the combination of any two or three of A, B, C and D, and also includes a combination of four of A, B, C and D (i.e., the technical solutions all connected by "logical AND").

The term "solid content" refers to the ratio of the mass of a solid in a slurry to the total mass of the slurry.

The technical solutions of the present disclosure are as follows:

In a first aspect, the embodiments of the present disclosure provide a compound dispersing agent, in which three components cooperate synergistically to effectively block or slow down the agglomeration of graphene in a dispersion, and the whole system has good stability. The compound dispersing agent includes a first anionic surfactant, a second anionic surfactant and a nonionic surfactant, wherein

In some embodiments, the first anionic surfactant may be selected from, but not limited to, sulfonate compounds.

In some embodiments, the second anionic surfactant includes one or more of betaine or carboxylate.

In some embodiments, the nonionic surfactant includes one or more of sulfonated naphthoquinone formaldehyde condensate, melamine-formaldehyde condensate, sodium methylnaphthalene sulfonic acid formaldehyde condensate, sodium cresol sulfonic acid formaldehyde condensate and sodium 2-naphthalene sulfonic acid formaldehyde condensate.

In the related art, although some dispersing agents can disperse graphene well in water, they cannot effectively disperse graphene in a plating solution. A plating solution is a solution system containing different ions and compounds, and the different ions and compounds will exert a certain influence on the dispersing agent added to the plating solution, which may cause the dispersing agent to lose its original dispersion function.

In the present disclosure, the first anionic surfactant plays a role in surface wetting and dispersion, the second anionic surfactant plays a main role in dispersion, and the nonionic surfactant plays a role in surface active wetting. The compound dispersing agent of the present disclosure has good synergistic compatibility, and functions to disperse the graphene in a plating solution system, exerts a certain positive effect on ion migration in the plating solution, and does not cause poisoning harm to the plating solution. In addition, the compound dispersing agent of the present disclosure also has a certain wetting effect on the cathode. Further, the compound dispersing agent of the present disclosure can make hydrogen bubbles easier to detach from electroplated parts, thereby reducing voids, wet the graphene to facilitate the exertion of the function of the dispersing agent, and under the action of the dispersing agent, the graphene can repel and disperse between each other to facilitate electroplating.

In some embodiments, the anionic surfactant includes a first anionic surfactant and a second anionic surfactant, and a mass ratio of the first anionic surfactant, the second anionic surfactant and the nonionic surfactant is (1~5):(0.5~4):(1~5), such as 1:0.5:1, 1:2:3, 1:3:4, 1:4:5, 2:0.5:1, 2:1.5:2, 2:3:4, 2:4:5, 3:0.5:1, 3:1:2, 3:2:3, 3:3:4, 3:4:5, 4:0.5:1, 4:1:1, 4:2:2, 4:2:3, 4:3:4, 4:4:5, 5:0.5:1, 5:1:1, 5:2:2, 5:2:3, 5:3:4, 5:4:5, or a value between any two of the foregoing numerical values. Within the described mass ratio range, a compound dispersing agent capable of effectively blocking or inhibiting the agglomeration of graphene in a dispersion can be obtained, and the compound dispersing agent system is stable.

In some embodiments, the first anionic surfactant may be selected from, but not limited to, sulfonate compounds.

The sulfonate compounds may be selected from, but not limited to, one or more of hydrocarbyl sulfonate, methylene dinaphthalene sulfonate, alkylbenzene sulfonate or alkylnaphthalene sulfonate.

The hydrocarbyl sulfonate includes one or more of sodium diheptyl sulfosuccinate, sodium dihexyl sulfosuccinate or sodium dodecyl diphenyl ether disulfonate.

The methylene dinaphthalene sulfonate includes one or more of sodium methylene dinaphthalene sulfonate or potassium methylene dinaphthalene sulfonate.

The alkylbenzene sulfonate includes one or more of sodium xylene sulfonate, sodium toluene sulfonate, sodium cumene sulfonate, potassium toluene sulfonate, ammonium xylene sulfonate or calcium xylene sulfonate.

The alkylnaphthalene sulfonate includes one or more of sodium alkylnaphthalene sulfonate and sodium butylnaphthalene sulfonate.

In some embodiments, the second anionic surfactant includes one or more of betaine or carboxylate.

The betaine includes trimethylglycine.

The carboxylate includes one or more of alkyl carboxylate and amido polypeptide carboxylate.

The alkyl carboxylate includes sodium stearate.

The amido polypeptide carboxylate includes sodium oleamide polypeptide carboxylate.

In a second aspect, embodiments of the present disclosure further provide a mixed electroplating solution, including the compound dispersing agent, water and graphene, where the compound dispersing agent is the compound dispersing agent according to the first aspect.

In some embodiments, the mixed electroplating solution further includes stannate, a copper salt, a complexing agent and alkali metal hydroxide.

The mixed electroplating solution of the present disclosure improves the dispersibility of graphene in a copper-tin electroplating solution, so that graphene is uniformly distributed on the plating layer after electroplating and the copper-tin alloy is uniformly distributed, thereby improving the electrical conductivity and wear resistance of the plated part.

In some embodiments, in the mixed electroplating solution, a mass concentration of the first anionic surfactant is 1-5 g/L, such as 1 g/L, 1.5 g/L, 2 g/L, 2.6 g/L, 3 g/L, 3.5 g/L, 4 g/L, 4.5 g/L, 5 g/L or a value between any two of the foregoing numerical values.

In some embodiments, in the mixed electroplating solution, a mass concentration of the second anionic surfactant is 0.5-4 g/L, such as 0.5 g/L, 0.8 g/L, 1 g/L, 1.2 g/L, 1.5 g/L, 1.8 g/L, 2 g/L, 2.5 g/L, 2.8 g/L, 3 g/L, 3.2 g/L, 3.5 g/L, 3.8 g/L, 4 g/L or a value between any two of the foregoing numerical values.

In some embodiments, in the mixed electroplating solution, a mass concentration of the nonionic surfactant is 1-5 g/L, such as 1 g/L, 1.2 g/L, 1.5 g/L, 1.8 g/L, 2 g/L, 2.2 g/L, 2.5 g/L, 2.8 g/L, 3 g/L, 3.3 g/L, 3.5 g/L, 3.8 g/L, 4 g/L, 4.2 g/L, 4.5 g/L, 4.8 g/L, 5 g/L or a value between any two of the foregoing numerical values.

In some embodiments, in the mixed electroplating solution, a mass-volume concentration of graphene is 0.5-2 g/L, such as 0.5 g/L, 0.8 g/L, 1 g/L, 1.2 g/L, 1.4 g/L, 1.6 g/L, 1.8 g/L, 2 g/L or a value between any two of the foregoing numerical values.

In some embodiments, in the mixed electroplating solution, a mass-volume concentration of the stannate is 85-130 g/L, such as 85 g/L, 90 g/L, 95 g/L, 100 g/L, 105 g/L, 110 g/L, 115 g/L, 120 g/L, 125 g/L, 130 g/L or a value between any two of the foregoing numerical values.

In some embodiments, in the mixed electroplating solution, a mass-volume concentration of the copper salt is 5-20 g/L, such as 5 g/L, 8 g/L, 10 g/L, 12 g/L, 15 g/L, 17 g/L, 18 g/L, 20 g/L or a value between any two of the foregoing numerical values.

In some embodiments, in the mixed electroplating solution, a mass-volume concentration of the complexing agent is 10-25 g/L, such as 10 g/L, 12 g/L, 16 g/L, 18 g/L, 20 g/L, 22 g/L, 23 g/L, 25 g/L or a value between any two of the foregoing numerical values.

In some embodiments, in the mixed electroplating solution, a mass-volume concentration of the alkali metal hydroxide is 5-15 g/L, such as 5 g/L, 8 g/L, 10 g/L, 12 g/L, 13 g/L, 15 g/L or a value between any two of the foregoing numerical values.

In some embodiments, the stannate includes one or more of sodium stannate and a hydrate thereof, preferably, the stannate incudes sodium stannate trihydrate.

In some embodiments, the copper salt comprises cuprous cyanide.

In some embodiments, the complexing agent includes one or more of potassium cyanide and sodium cyanide.

In some embodiments, the alkali metal hydroxide includes one or more of potassium hydroxide and sodium hydroxide.

In some embodiments, a temperature for electroplating with the mixed electroplating solution is 45~65°C, such as 45°C, 48°C, 50°C, 52°C, 54°C, 56°C, 58°C, 60°C, 64°C, 65°C or a value between any two of the foregoing numerical values.

In some embodiments, a current density for electroplating with the mixed electroplating solution is 0.5~1.5 A/dm², such as 0.5 A/dm², 0.6 A/dm², 0.8 A/dm², 1 A/dm², 1.2 A/dm², 1.3 A/dm², 1.5 A/dm².

In a third aspect, embodiments of the present disclosure further provide a conductor, comprising a substrate and a plating layer located outside the substrate, the plating layer is prepared from the mixed electroplating solution according to the second aspect.

### Example 1

The present Example provides a compound dispersing agent, which is composed of distilled water, a first anionic surfactant, a second anionic surfactant and a nonionic surfactant; the first anionic surfactant is sulfonate compounds, the sulfonate compound is a hydrocarbyl sulfonate, and the hydrocarbyl sulfonate is sodium diheptyl sulfosuccinate; the second anionic surfactant is betaine, and the betaine is trimethylglycine; the nonionic surfactant is sulfonated naphthoquinone formaldehyde condensate; in the compound dispersing agent, a mass fraction of the first anionic surfactant is 3%, a mass fraction of the second anionic surfactant is 2.25%, a mass fraction of the nonionic surfactant is 3%, and the balance is distilled water.

In the present Example, a preparation method of the compound dispersing agent is prepared according to a conventional method in the art.

### Example 2

The present Example is basically the same as Example 1, except that in the compound dispersing agent, a mass fraction of the first anionic surfactant is 1%, a mass fraction of the second anionic surfactant is 0.5%, a mass fraction of the nonionic surfactant is 1%, and the balance is distilled water.

### Example 3

The present Example is basically the same as Example 1, except that in the compound dispersing agent, a mass fraction of the first anionic surfactant is 5%, a mass fraction of the second anionic surfactant is 4%, a mass fraction of the nonionic surfactant is 5%, and the balance is distilled water.

### Example 4

The present Example is basically the same as Example 1, except that the first anionic surfactant is sulfonate compounds, the sulfonate compound is a hydrocarbyl sulfonate, and the hydrocarbyl sulfonate is sodium dihexyl sulfosuccinate; the second anionic surfactant is a carboxylate, the carboxylate is an alkyl carboxylate, and the alkyl carboxylate is sodium stearate; the nonionic surfactant is melamine-formaldehyde condensate.

### Example 5

The present Example is basically the same as Example 1, except that the first anionic surfactant is sulfonate compounds, the sulfonate compound is a hydrocarbyl sulfonate, and the hydrocarbyl sulfonate is sodium dodecyl diphenyl ether disulfonate; the second anionic surfactant is a carboxylate, the carboxylate is an amido polypeptide carboxylate, and the amido polypeptide carboxylate is sodium oleamide polypeptide carboxylate; the nonionic surfactant is melamine-formaldehyde condensate.

### Example 6

The present Example is basically the same as Example 1, except that the first anionic surfactant is sulfonate compounds, the sulfonate compound is methylene dinaphthalene sulfonate, and the methylene dinaphthalene sulfonate is sodium methylene dinaphthalene sulfonate; the second anionic surfactant is a carboxylate, the carboxylate is an amido polypeptide carboxylate, and the amido polypeptide carboxylate is sodium oleamide polypeptide carboxylate; the nonionic surfactant is sodium methylnaphthalene sulfonic acid formaldehyde condensate .

### Example 7

The present Example is basically the same as Example 1, except that the first anionic surfactant is sulfonate compounds, the sulfonate compound is an alkylbenzene sulfonate, and the alkylbenzene sulfonate is sodium xylene sulfonate; the second anionic surfactant is a carboxylate, the carboxylate is an alkyl carboxylate, and the alkyl carboxylate is sodium stearate; the nonionic surfactant is sodium cresol sulfonic acid formaldehyde condensate.

### Example 8

The present Example is basically the same as Example 1, except that the first anionic surfactant is sulfonate compounds, the sulfonate compound is an alkylbenzene sulfonate, and the alkylbenzene sulfonate is ammonium xylene sulfonate; the second anionic surfactant is a carboxylate, the carboxylate is an amido polypeptide carboxylate, and the amido polypeptide carboxylate is sodium oleamide polypeptide carboxylate; the nonionic surfactant is sodium 2-naphthalene sulfonic acid formaldehyde condensate.

### Electroplating Solution Example 1

The mixed electroplating solution of the present Example includes a first anionic surfactant, a second anionic surfactant, a nonionic surfactant, water, graphene, stannate, copper salt, a complexing agent and alkali metal hydroxide; in the mixed electroplating solution, the first anionic surfactant is sodium diheptyl sulfosuccinate with a content of 3 g/L, the second anionic surfactant is trimethylglycine with a content of 2.25 g/L, the nonionic surfactant is sulfonated naphthoquinone formaldehyde condensate with a content of 3 g/L, a mass-volume concentration of the graphene is 1.25 g/L, a mass-volume concentration of the stannate is 107 g/L, a mass-volume concentration of the copper salt is 12 g/L, a mass-volume concentration of the complexing agent is 17 g/L, and a mass-volume concentration of alkali metal hydroxide is 10 g/L; the stannate is sodium stannate trihydrate, the copper salt is cuprous cyanide, the complexing agent is potassium cyanide, and the alkali metal hydroxide is sodium hydroxide.

A preparation method of the mixed electroplating solution is prepared according to a conventional method in the art.

### Electroplating Solution Example 2

The present Example is basically the same as Electroplating Solution Example 1, except that in the mixed electroplating solution, the first anionic surfactant is sodium diheptyl sulfosuccinate with a content of 1 g/L, the second anionic surfactant is trimethylglycine with a content of 0.5 g/L, the nonionic surfactant is sulfonated naphthoquinone formaldehyde condensate with a content of 1 g/L, a mass-volume concentration of the graphene is 0.5 g/L, a mass-volume concentration of the stannate is 85 g/L, a mass-volume concentration of the copper salt is 5 g/L, a mass-volume concentration of the complexing agent is 10 g/L, and a mass-volume concentration of the alkali metal hydroxide is 5 g/L; the stannate is sodium stannate trihydrate, the copper salt is cuprous cyanide, the complexing agent is potassium cyanide, and the alkali metal hydroxide is potassium hydroxide.

### Electroplating Solution Example 3

The present Example is basically the same as Electroplating Solution Example 1, except that in the mixed electroplating solution, the first anionic surfactant is sodium diheptyl sulfosuccinate with a content of 5 g/L, the second anionic surfactant is trimethylglycine with a content of 4 g/L, the nonionic surfactant is sulfonated naphthoquinone formaldehyde condensate with a content of 5 g/L, a mass-volume concentration of the graphene is 2 g/L, a mass-volume concentration of the stannate is 130 g/L, a mass-volume concentration of the copper salt is 20 g/L, a mass-volume concentration of the complexing agent is 25 g/L, and a mass-volume concentration of the alkali metal hydroxide is 15 g/L; the stannate is sodium stannate trihydrate, the copper salt is cuprous cyanide, the complexing agent is sodium cyanide, and the alkali metal hydroxide is sodium hydroxide.

### Electroplating Solution Example 4

The mixed electroplating solution of the present Example includes a first anionic surfactant, a second anionic surfactant, a nonionic surfactant, water, graphene, stannate, a copper salt, a complexing agent and an alkali metal hydroxide; in the mixed electroplating solution, the first anionic surfactant is sodium dihexyl sulfosuccinate with a content of 3.5 g/L, the second anionic surfactant is sodium stearate with a content of 2.5 g/L, the nonionic surfactant is melamine-formaldehyde condensate with a content of 3.2 g/L, a mass-volume concentration of the graphene is 0.8 g/L, a mass-volume concentration of the stannate is 108 g/L, a mass-volume concentration of the copper salt is 10 g/L, a mass-volume concentration of the complexing agent is 15 g/L, and a mass-volume concentration of the alkali metal hydroxide is 10 g/L; the stannate is sodium stannate trihydrate, the copper salt is cuprous cyanide, the complexing agent is potassium cyanide, and the alkali metal hydroxide is potassium hydroxide.

### Electroplating Solution Example 5

The mixed electroplating solution of the present Example includes a first anionic surfactant, a second anionic surfactant, a nonionic surfactant, water, graphene, stannate, a copper salt, a complexing agent and an alkali metal hydroxide; in the mixed electroplating solution, the first anionic surfactant is sodium dodecyl diphenyl ether disulfonate with a content of 3 g/L, the second anionic surfactant is sodium oleamide polypeptide carboxylate with a content of 2 g/L, the nonionic surfactant is melamine-formaldehyde condensate with a content of 3.5 g/L, a mass-volume concentration of graphene is 1 g/L, a mass-volume concentration of the stannate is 102 g/L, a mass-volume concentration of the copper salt is 12 g/L, a mass-volume concentration of the complexing agent is 14 g/L, and a mass-volume concentration of the alkali metal hydroxide is 9 g/L; the stannate is sodium stannate trihydrate, the copper salt is cuprous cyanide, the complexing agent is sodium cyanide, and the alkali metal hydroxide is sodium hydroxide.

### Electroplating Solution Example 6

The mixed electroplating solution of the present Example includes a first anionic surfactant, a second anionic surfactant, a nonionic surfactant, water, graphene, stannate, a copper salt, a complexing agent and an alkali metal hydroxide; in the mixed electroplating solution, the first anionic surfactant is sodium methylene dinaphthalene sulfonate with a content of 3 g/L, the second anionic surfactant is sodium oleamide polypeptide carboxylate with a content of 2 g/L, the nonionic surfactant is sodium methylnaphthalene sulfonic acid formaldehyde condensate with a content of 3.5 g/L, a mass-volume concentration of the graphene is 0.8 g/L, a mass-volume concentration of the stannate is 106 g/L, a mass-volume concentration of the copper salt is 12 g/L, a mass-volume concentration of the complexing agent is 13 g/L, and a mass-volume concentration of the alkali metal hydroxide is 8 g/L; the stannate is sodium stannate trihydrate, the copper salt is cuprous cyanide, the complexing agent is sodium cyanide, and the alkali metal hydroxide is sodium hydroxide.

### Electroplating Solution Example 7

The mixed electroplating solution of the present Example includes a first anionic surfactant, a second anionic surfactant, a nonionic surfactant, water, graphene, a stannate, a copper salt, a complexing agent and an alkali metal hydroxide; in the mixed electroplating solution, the first anionic surfactant is sodium xylene sulfonate with a content of 3.2 g/L, the second anionic surfactant is sodium stearate with a content of 2.2 g/L, the nonionic surfactant is sodium cresol sulfonic acid formaldehyde condensate with a content of 2.8 g/L, a mass-volume concentration of the graphene is 1.1 g/L, a mass-volume concentration of the stannate is 108 g/L, a mass-volume concentration of the copper salt is 10 g/L, a mass-volume concentration of the complexing agent is 14 g/L, and a mass-volume concentration of alkali metal hydroxide is 10 g/L; the stannate is sodium stannate trihydrate, the copper salt is cuprous cyanide, the complexing agent is potassium cyanide, and the alkali metal hydroxide is potassium hydroxide.

### Electroplating Solution Example 8

The mixed electroplating solution of the present Example includes a first anionic surfactant, a second anionic surfactant, a nonionic surfactant, water, graphene, a stannate, a copper salt, a complexing agent and an alkali metal hydroxide; in the mixed electroplating solution, the first anionic surfactant is ammonium xylene sulfonate with a content of 2.8 g/L, the second anionic surfactant is sodium oleamide polypeptide carboxylate with a content of 2.5 g/L, the nonionic surfactant is sodium 2-naphthalene sulfonic acid formaldehyde condensate with a content of 3.6 g/L, a mass-volume concentration of the graphene is 1.2 g/L, a mass-volume concentration of the stannate is 100 g/L, a mass-volume concentration of the copper salt is 15 g/L, a mass-volume concentration of the complexing agent is 16 g/L, and a mass-volume concentration of the alkali metal hydroxide is 9 g/L; the stannate is sodium stannate trihydrate, the copper salt is cuprous cyanide, the complexing agent is potassium cyanide, and the alkali metal hydroxide is potassium hydroxide.

### Comparative Example 1

Commercially available pure iron part.

### Comparative Example 2

The present comparative example is basically the same as Electroplating Solution Example 1, except that the compound dispersing agent and graphene are removed from the mixed electroplating solution.

### Comparative Example 3

The present comparative example is basically the same as Electroplating Solution Example 1, except that the compound dispersing agent in Electroplating Solution Example 1 is replaced with conventional 2-ethylhexyl sulfate sodium salt in the art.

### Comparative Example 4

The present comparative example is basically the same as Electroplating Solution Example 1, except that the compound dispersing agent in Electroplating Solution Example 1 is replaced with conventional sodium dioctyl sulfosuccinate in the art.

Electroplating is performed at a temperature of 55°C and at a current density of 1 A/dm². After electroplating, Vickers hardness is tested with a Vickers hardness tester; to eliminate interference of an iron base metal on hardness test of the plating layer, a thickness of the metal plating layer tested in the experiment is greater than 30 micrometers; the micro-resistance is tested with a precision four-probe resistivity tester; the wear resistance is tested with a steel wool friction resistance tester on the plating layer, the mass before and after every 5000 times of friction is measured, and a wear rate is calculated by mass difference; Zeta potential is tested by an electrophoresis method to measure dispersion uniformity of the plating solution. Test results are shown in Table 1.

**Table 1**

| No. | Zeta potential (mV) | Hardness (HV) | Micro-resistance (mΩ) | Average wear rate per 5000 times (mg/g) |
|---|---|---|---|---|
| Electroplating Solution Example 1 | -49.3 | 282 | 0.1725 | 11 |
| Electroplating Solution Example 2 | -49.1 | 284 | 0.1780 | 10 |
| Electroplating Solution Example 3 | -48.2 | 281 | 0.1712 | 8 |
| Electroplating Solution Example 4 | -48.5 | 290 | 0.1700 | 12 |
| Electroplating Solution Example 5 | 49.0 | 280 | 0.1755 | 13 |
| Electroplating Solution Example 6 | -49.8 | 285 | 0.1711 | 11 |
| Electroplating Solution Example 7 | 49.3 | 284 | 0.1722 | 12 |
| Electroplating Solution Example 8 | 48.2 | 281 | 0.1725 | 13 |
| Comparative Example 1 | / | 238 | 0.1911 | / |
| Comparative Example 2 | / | 155 | 0.1825 | 25 |
| Comparative Example 3 | -26.8 | 255 | 0.1810 | 18 |
| Comparative Example 4 | -24.8 | 246 | 0.1822 | 20 |

| | | | | |
|---|---|---|---|---|
| The Note: Wear resistance refers to the number of times that can be withstood per micrometer on average, unit: times. | | | | |

It can be seen from Table 1 that compared with Comparative Examples 3 and 4, the electroplating solutions of Examples 1-8 of the present disclosure have higher absolute values of Zeta potential than Comparative Examples 3 and 4, indicating that graphene in the electroplating solution added with the compound dispersing agent of the present disclosure has better dispersibility; the products plated by the electroplating solutions of Examples 1-8 of the present disclosure have higher hardness than those of Comparative Examples 1-4, indicating that products plated by the electroplating solution added with the compound dispersing agent of the present disclosure have higher hardness; the products plated by the electroplating solutions of Examples 1-8 of the present disclosure have lower micro-resistance than those of Comparative Examples 1-4, indicating that the products plated by the electroplating solution added with the compound dispersing agent of the present disclosure have better electrical conductivity; the products plated by the electroplating solutions of Examples 1-8 of the present disclosure have lower average wear rate per 5000 times than those of Comparative Examples 2-4, indicating that the plating layers of products plated by the electroplating solution added with the compound dispersing agent of the present disclosure have better wear resistance. Since Comparative Example 1 is a pure iron part, Comparative Example 2 is only plated with copper-tin, and Comparative Examples 3 and 4 are conventional dispersing agents in the art, the dispersibility of graphene in the electroplating solutions of Comparative Examples 3 and 4 is poorer than that of Examples 1-8.

## Claims

1. A compound dispersing agent, comprising a first anionic surfactant, a second anionic surfactant and a nonionic surfactant, wherein the first anionic surfactant comprises sulfonate compounds; and/or
the second anionic surfactant comprises one or more of betaine or carboxylate; and/or
the nonionic surfactant comprises one or more of sulfonated naphthoquinone formaldehyde condensate, melamine-formaldehyde condensate, sodium methylnaphthalene sulfonic acid formaldehyde condensate, sodium cresol sulfonic acid formaldehyde condensate or sodium 2-naphthalene sulfonic acid formaldehyde condensate.

2. The compound dispersing agent according to claim 1, wherein a mass ratio of the first anionic surfactant, the second anionic surfactant and the nonionic surfactant is (1~5):(0.5~4):(1~5).

3. The compound dispersing agent according to claim 1, wherein the sulfonate compounds comprise one or more of hydrocarbyl sulfonate, methylene dinaphthalene sulfonate, alkylbenzene sulfonate and alkylnaphthalene sulfonate; and/or
the betaine comprises trimethylglycine; and/or
the carboxylate comprises one or more of alkyl carboxylate and amido polypeptide carboxylate.

4. The compound dispersing agent according to claim 3, wherein the hydrocarbyl sulfonate comprises one or more of sodium diheptyl sulfosuccinate, sodium dihexyl sulfosuccinate or sodium dodecyl diphenyl ether disulfonate; and/or
the methylene dinaphthalene sulfonate comprises one or more of sodium methylene dinaphthalene sulfonate or potassium methylene dinaphthalene sulfonate; and/or
the alkylbenzene sulfonate comprises one or more of sodium xylene sulfonate, sodium toluene sulfonate, sodium cumene sulfonate, potassium toluene sulfonate, ammonium xylene sulfonate or calcium xylene sulfonate; and/or
the alkylnaphthalene sulfonate comprises one or more of sodium alkylnaphthalene sulfonate or sodium butylnaphthalene sulfonate; and/or
the alkyl carboxylate comprises sodium stearate; and/or
the amido polypeptide carboxylate comprises sodium oleamide polypeptide carboxylate.

5. A mixed electroplating solution, comprising a compound dispersing agent, water and graphene, wherein the compound dispersing agent comprises the compound dispersing agent according to any one of claims 1-4.

6. The mixed electroplating solution according to claim 5, further comprising stannate, a copper salt, a complexing agent and an alkali metal hydroxide.

7. The mixed electroplating solution according to claim 6, wherein in the mixed electroplating solution,
a mass concentration of the first anionic surfactant is 1-5 g/L; and/or
a mass concentration of the second anionic surfactant is 0.5-4 g/L; and/or
a mass concentration of the nonionic surfactant is 1-5 g/L; and/or
a mass concentration of the graphene is 0.5-2 g/L; and/or
a mass concentration of the stannate is 85-130 g/L; and/or
a mass concentration of the copper salt is 5-20 g/L; and/or
a mass concentration of the complexing agent is 10-25 g/L; and/or
a mass concentration of the alkali metal hydroxide is 5-15 g/L.

8. The mixed electroplating solution according to claim 6, wherein in the mixed electroplating solution, the stannate comprises one or more of sodium stannate or a hydrate thereof; and/or
the copper salt comprises cuprous cyanide; and/or
the complexing agent comprises one or more of potassium cyanide or sodium cyanide; and/or
the alkali metal hydroxide comprises one or more of potassium hydroxide or sodium hydroxide.

9. The mixed electroplating solution according to claim 6, wherein a temperature for electroplating with the mixed electroplating solution is 45~65°C; and/or
a current density is 0.5~1.5 A/dm².

10. A conductor, comprising a substrate and a plating layer located outside the substrate, wherein the plating layer is prepared from the mixed electroplating solution according to any one of claims 5-9.
